# EUROPEAN PATENT APPLICATION

(11) **EP 1 734 059 A1**
(43) Date of publication of application: **20.12.2006**
(21) Application number: 05105162.1
(22) Date of filing: 13.06.2005
(51) Int. Cl.: C08F 10/00, C08F 4/64, C07F 17/00

(54) **Carbon-bridged cyclopentadienyl-fluorenyl ligands**

(71) Applicant: TOTAL PETROCHEMICALS RESEARCH FELUY, 7181 Seneffe (Feluy) (BE)
(72) Inventor: Razavi, Abbas, 7000 Mons (BE); Kirillov, Evgueni Dr App. B318, Rés. Les Estudines, 35000 Rennes (FR); Gladysz, John, 91056 Erlangen (DE)

(57) **Abstract**

The present invention discloses efficient methods for preparing substituted cyclopentadienyl-fluorenyl catalyst components having a mono-carbon bridge.

## Description

The present invention relates to new methods for the preparation of metallocene catalyst components based on carbon-bridged cyclopentadienyl-fluorenyl ligands.

It is possible to develop catalyst systems that are able to produce different types of polymer such as isotactic, syndiotactic or atactic. It is however desirable that the selected catalyst produces predominantly an isotactic or syndiotactic polymer with very little atactic polymer. C2- or C1-symmetric metallocene catalysts are known to produce isotactic polyolefins. For example, C2 symmetric bis-indenyl type zirconocenes can produce high molecular weight high melting temperature isotactic polypropylene. The preparation of this metallocene catalyst is however costly and time-consuming. Most importantly, the final catalyst consists of a mixture of racemic and meso isomers in an often unfavourable ratio. The meso stereoisomer has to be separated to avoid the formation of atactic polypropylene during the polymerisation reaction.

EP-A-0426644 relates to syndiotactic copolymers of olefins such as propylene obtainable using as a catalyst component isopropyl (fluorenyl)(cyclopentadienyl) zirconium dichloride. Syndiotacticity, as measured by the amount of syndiotactic pentads, rrrr was found to be 73-80%.

EP 747406 relates to the polymerisation of an olefin monomer to form a syndiotactic/isotactic block polyolefin, particularly a block polypropylene. A component of the polymerisation catalyst was a 3-trimethylsilyl cyclopentadienyl-9-fluorenyl zirconium or hafnium dichloride having an isopropylidene or diphenylmethylidene bridge.

EP-A-577581 discloses the production of syndiotactic polypropylenes using metallocene catalysts having fluorenyl groups substituted in positions 2 and 7 and an unsubstituted cyclopentadienyl ring.

EP-A-0419677 describes the production of syndiotactic polypropylene with an object to produce resin compositions having high stiffness when moulded. Metallocene catalysts such as isopropyl(cyclopentadienyl-1-fluorenyl) zirconium dichloride were used in the production of the polypropylene. However the molecular weight, melting point and syndiotacticity of these products were relatively low.

There is a need to develop new catalyst systems capable to provide polymers with improved properties and efficient methods for preparing them.

It is an aim of the present invention to provide catalyst systems for the preparation of polymers having high molecular weight.

it is also an aim of the present invention to prepare polymers having a high melting temperature.

it is another aim of the present invention to prepare impact copolymers having improved impact properties.

It is a further aim of the present invention to prepare the catalyst systems capable to provide these improved polymers.

Accordingly, the present invention provides a process for preparing a catalyst component of general formula

R^{a}₂C (3,6-R^{b}₂-Flu) (2-R^{c}-4-R^{d}-C₅H₂) MQ₂

werein each R^{a} is independently selected from H or, unsubstituted or substituted aromatic group, preferably phenyl group,
wherein R^{b}, R^{c} and R^{d} are each independently selected from H or alkyl having from 1 to 12 carbon atoms or aryl groups substituted or unsubstituted with the restriction that they are not all simultaneously hydrogen,
wherein M is a metal Group 4 of the Periodic Table and Q is halogen or alkyl having from 1 to 12 carbon atoms, that comprises the steps of:
a) reaction by nucleophilic addition, in a solvent, of the group (R^{a}₂C-2-R^{c}-4-R^{d}-fulvene) with the group [3,6-R^{b}₂-Flu ]⁻ [M']⁺;
b) hydrolysis and separation of the resulting ligand;
c) deprotonation of the ligand of step b) with R'M" to prepare a di-anion ligand, wherein R' is an alkyl having from 1 to 6 carbon atoms and M" is Li, Na or K;
d) salt metathesis reaction in a solvent of the di-anion ligand of step c) with MQ₄;
e) isolation of the catalyst component.

In a preferred embodiment according to the present invention, in the bridge R^{a}₂C, one R^{a} is unsubstituted phenyl and the other R^{a} is H.

In another preferred embodiment, both R^{a} in the bridge are substituted phenyl groups. The substituents on the phenyl groups can be selected from halogen or alkyl having from 1 to 12 carbon atoms, or aryl groups, or CX₃ wherein X is a halogen, preferably F.

Preferably, both R^{b} are the same and are alkyl having from 1 to 6 carbon atoms, more preferably they both are tert-butyl.

Preferably R^{c} is H or methyl.

Preferably R^{d} is alkyl having from 1 to 6 carbon atoms, more preferably, it is tert-butyl.

Preferably M is Zr, Hf or Ti, more preferably, it is Zr.

Preferably Q is halogen or methyl, more preferably it is chlorine.

Preferably, M" is Li.

The solvent of steps a) and d) may be the same or different and are hydrocarbon, preferably selected from pentane, toluene, tetrahydrofuran (THF) or diethyl ether (Et₂O). Preferably they are the same and it is Et₂O. Without wishing to be bound by a theory, it is believed Et₂O stabilises a transition state of the nucleophilic addition reaction including bulky constrained reagents. The reaction of step a) is carried out at a temperature of from 0 to 60 °C, preferably at room temperature for a period of time of from 6 to 24 hours, preferably of about 12 hours.

Any activating agent having an ionising action known in the art may be used for activating the metallocene component. For example, it can be selected from aluminium-containing or boron-containing compounds. The aluminium-containing compounds comprise aluminoxane, alkyl aluminium and/or Lewis acid.

The aluminoxanes are preferred and may comprise oligomeric linear and/or cyclic alkyl aluminoxanes represented by the formula: 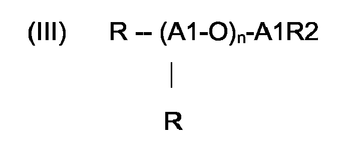 for oligomeric, linear aluminoxanes and 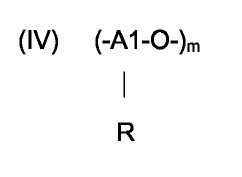 for oligomeric, cyclic aluminoxane,
wherein n is 1-40, preferably 10-20, m is 3-40, preferably 3-20 and R is a C₁-C₈ alkyl group and preferably methyl.

Suitable boron-containing activating agents that can be used comprise a triphenylcarbenium boronate such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

The catalyst system can also be supported. The support if present can be a porous mineral oxide, advantageously selected from silica, alumina and mixtures thereof. Preferably it is silica.

Alternatively, an activating support can be used.

The catalyst system of the present invention can be used in the polymerisation of ethylene and alpha-olefins. It is preferably used to prepare highly isotactic propylene homopolymers having a high weight average molecular weight of at least 500 kDa, preferably at least 700 kDa, a high melting temperature of more than 150°C, preferably of more than 160 °C.

It can also be used to prepare ethylene-propylene rubber (EPR) having an ethylene content of from 8 to 15 wt%, a high weight average molecular weight of at least 500 kDa, preferably at least 700 kDa, and a melt flow index MFI of from 2 to 10 dg/min. The melt flow index is measured following the method of standard test ASTM D 1238 under a load of 2.16 kg and at a temperature of 230 °C. The EPR obtained in the present invention is characterised by excellent impact properties. It can be used in all applications that require elastomers with excellent thermoplastic properties.

### List of Figures.

Figure 1 represents the reaction scheme for the preparation of complex H₂C(3,6-^{t}Bu₂Flu)(3-^{t}Bu-5-Me-Cp)ZrCl₂ **(3).**
Figure 2 represents the ¹H NMR spectrum of ligand 3,6-di-*tert* butyl-9-[(3-*tert* butyl-5-methylcyclopenta-1,4-dien-1-yl)methyl]-9*H*-fluorene **(2).**
Figure 3 represents the ¹H NMR spectrum of complex H₂C(3,6-*^{t}*Bu₂Flu)(3-*^{t}*Bu-5-Me-Cp)ZrCl₂ **(3).**
Figure 4 represents the reaction scheme for the preparation of complex PhHC(3,6-*^{t}*Bu₂Flu)(3-*^{t}*Bu-5-Me-Cp)ZrCl₂ (**6**).
Figure 5 represents the ¹H NMR spectrum of 6-phenyl-2-methyl-4-*tert*-butyl-fulvene **(4).**
Figure 6 represents the ¹H NMR spectrum of ligand 3,6-Di-*tert*-butyl-9-[(4-*tert*-butyl-2-methyl-cyclopenta-1,4-dienyl)-phenyl-ethyl]-9H-fluorene **(5).**
Figure 7 represents the ¹HNMR spectrum of complex PhHC(3,6-*^{t}*Bu₂Flu)(3-*^{t}*Bu-5-Me-Cp)ZrCl₂ **(6).**
Figure 8 represents the reaction scheme for the preparation of complex Ph₂C(3,6-*^{t}*Bu₂-Flu)(3-*^{t}*Bu-Cp)ZrCl₂ **(9).**
Figure 9 represents the reaction scheme for the preparation of complex (p-Cl-Ph)₂C(3,6-*^{t}*Bu₂Flu)(3-*^{t}*Bu-5-Me-Cp)ZrCl₂ **(17).**
Figure 10 represents the reaction scheme for the preparation of ligand 3,6-di-*tert-*butyl-9-{(4-*tert*-butyl-2-methylcyclopenta-1,4-dien-1-yl)[bis(4-fluorophenyl)]methyl}-9H-fluorene (**19**).
Figure 11 represents the reaction scheme for the preparation of ligand 9-[bis[3,5-bis(trifluoromethyl)phenyl](4-*tert*-butyl-2-methylcyclopenta-1,4-dien-1-yl)methyl]-3,6-di-*tert*-butyl-9H-fluorene (**21**).
Figure 12 represents the reaction scheme for the preparation of ligand 9-[[3,5-bis(trifluoromethyl)phenyl](4-*tert*-butyl-2-methylcyclopenta-1,4-dien-1-yl)methyl]-3,6-di-*tert*-butyl-9*H*-fluorene **(23).**

### Examples.

All experiments were performed under purified argon atmosphere using standard Schlenk techniques or in a glovebox. Solvents were distilled from Na/benzophenone (tetrahydrofuran (THF), diethyl ether (Et₂O)) and Na/K alloy (toluene, pentane) under nitrogen, they were thoroughly degassed and stored under nitrogen. Deuterated solvents (benzene-*d*₆, toluene-*d*₈, THF-*d*₈; >99.5% D, Deutero GmbH) were vacuum-transferred from Na/K alloy into storage tubes. Chloroform-d*₁* and CD₂Cl₂ were kept over calcium hydride and vacuum-transferred before use. The precursors 3,6,6'-trimethyl-fulvene, 2-methyl-4-*tert* butyl-cyclopentadiene (mixture of isomers) and 1-methyl-3-tert-butyl-cyclopentadienyl lithium were prepared according to known procedures and characterised by ¹H NMR spectroscopy. 1-*tert*-butyl-cyclopentadiene (mixture of isomers) was prepared according to a procedure described in Moore and Jean King (Moore W.R. and Jean King B., J. Org. Chem., 36, 1882, 1971).

### Synthesis of complex H₂C(3,6-^{t}Bu₂Flu)(3-^{t}Bu-5-Me-Cp)ZrCl₂ (3).

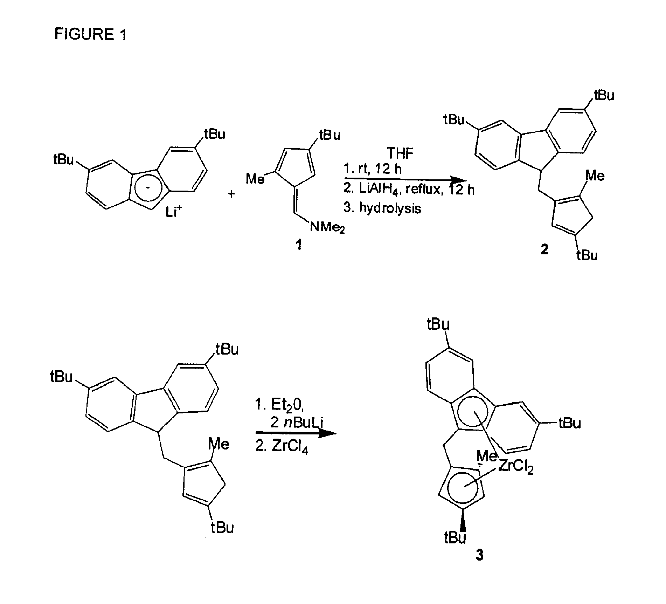

The scheme is represented in figure 1.

### a) Synthesis of 3,6-di-tert-butyl-9-[(3-tert-butyl-5-methylcyclopenta-1,4-dien-1-yl)methyl]-9H-fluorene (2).

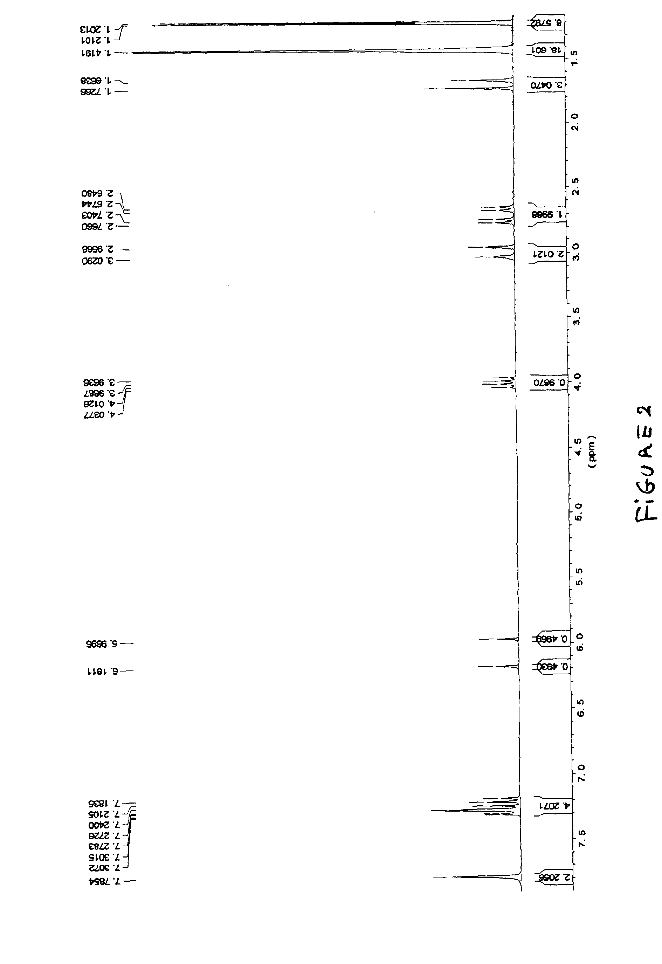

To a solution of 3.2 g (16.73 mmol) of 6-dimethylamino-2-methyl-4-*tert*-butyl-fulvene in 50 mL of THF were added, at room temperature, 50 mL of a solution of 3,6-di-*tert-*butyl-fluorenyl-lithium prepared from 4.65 g (16.70 mmol) of 3,6-di-*tert*-butyl-fluorene and 6.70 mL (16.70 mmol) of a 2.5 M solution of n-butyl-lithium. The reaction mixture was stirred for 12 h at room temperature. Then 1.17 g (30.79 mmol) of LiAlH₄ were added and the resulting mixture was refluxed for another 12 h and then carefully quenched with 50 mL of a saturated solution of NH₄Cl diluted with 100 mL of diethyl ether. The organic layer was separated, washed twice with 200 mL of water and dried over CaCl₂. All the volatiles were removed in vacuum. The crude yellow product was purified by column chromatography over silica gel to give 4.27 g (10.02 mmol) of final product **2** with a yield of 60 % yield. This product was a 1:1 mixture of double bond isomers in the cyclopentadienyl ring.
¹H NMR (CDCl₃, 300 MHz, 25 °C) spectrum is presented in Figure 2 and is characterised as follows : δ 7.78 (s, 4H, Flu), 7.40-7.10 (m, 8H, Flu), 7.08 (dd, 1 H, Flu), 6.18 (s, 1 H, Cp), 5.97 (d, 1 H, Cp), 4.00 (q, 2H, ³*J* = 14.7 Hz, 9-Flu), 3.00 (m, 4H, C*H*₂, Cp), 2.70 (m, 4H, C*H*₂), 1.73, 1.66 (s, 3H, C*H*₃), 1.42 (s, 36H, CC*H*₃-Flu), 1.21 (s, 18H, CC*H*₃-Flu).
Anal. Calcd for C₃₂H₄₂: C, 90.08; H, 9.92. Found: C, 91.01; H, 9.99.

### b) Synthesis of the complex H₂C(3,6-^{t}Bu₂Flu)(3-^{t}Bu-5-Me-Cp)ZrCl₂ (3).

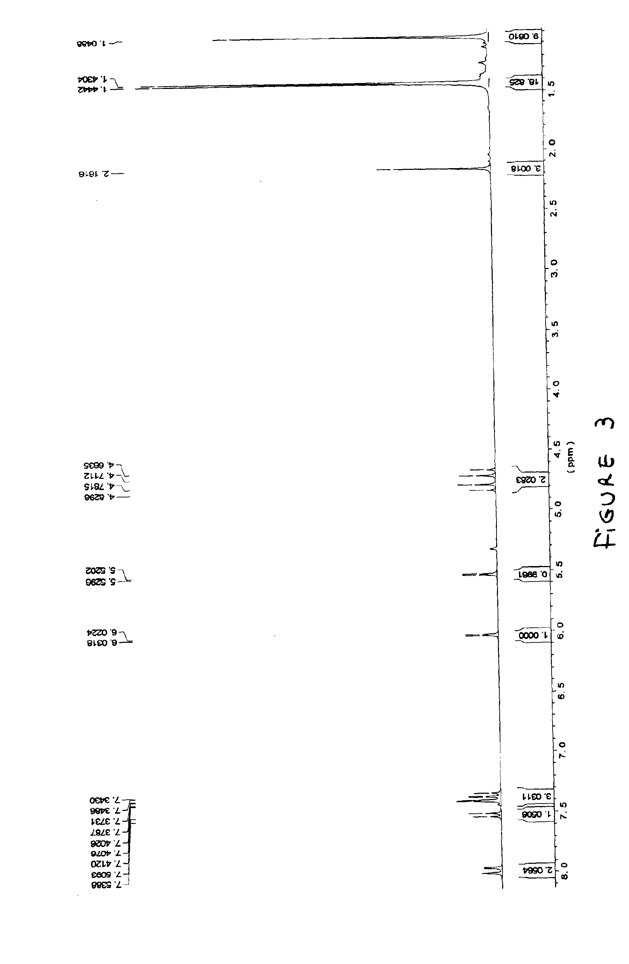

To a solution of 1.67 g (3.91 mmol) 6-dimethylamino-2-methyl-4-*tert*-butyl-fulvene (**1**) in 40 ml of Et₂O were added 3.10 ml (7.82 mmol) of a 2.5 M solution of butyl-lithium in hexane at 0 °C. The reaction mixture was stirred for 4 h and the solvent was evaporated under reduced pressure. Then in glovebox 0.91 g (3.90 mmol) of anhydrous ZrCl₄ were added followed by the addition of 50 mL of pentane. The resulting pink reaction mixture was stirred at room temperature overnight. The reaction mixture was filtered off and the filtrate was evaporated in vacuum. A portion of about 30 mL of hexane was added and the resulting clear solution was kept at -30 °C overnight to give a pink microcrystalline powder precipitate of complex **3.** A second batch of 1.48 g (2.52 mmol) of product **3** was obtained from the mother liqueur upon cooling with a yield of 64 %. Crystals suitable for X-ray diffraction were obtained by slow concentration from a 3:7 CH₂Cl₂/hexane mixture.
¹H NMR (CD₂Cl₂, 300 MHz, 25 °C) spectrum is presented in Figure 3 and is characterised as follows : δ 8.01 (s, 1 H, Flu), 7.97 (s, 1 H, Flu), 7.52 (s, 1 H, Flu), 7.40 (m, 2H, Flu), 7.37 (m, 1 H, Flu), 6.02 (d, 1 H, ⁴*J* = 2,8 Hz, Cp), 5.52 (d, 1 H, ⁴*J* = 2,8 Hz, Cp), 4.74 (m, 2H, C*H*₂), 2.16 (s, 3H, CH₃), 1.44 (s, 9H, CCH₃-Flu), 1.43 (s, 9H, CC*H*₃-Flu), 1.05 (s, 9H, CC*H*₃-Flu).
¹³C NMR (CD₂Cl₂, 75 MHz, 25 °C): δ 150.1, 150.0, 146.4, 127.9, 127.6, 124.8, 124.1, 124.0, 123.3, 121.8, 120.7, 120.6, 120.2, 119.7, 118.2, 102.4, 97.0, 70.3, 35.6, 33.3, 32.2, 32.1, 32.0, 30.0, 22.5 (CH₂), 16.1. Anal. Calcd for C₃₂H₄₀Cl₂Zr : C, 65.50; H, 6.87; Cl, 12.08. ( Molecular mass Mr = 586.79 kg/mol) Found: C, 66.12; H, 6.99.

### Synthesis of the complex Ph(H)C(3,6-^{t}Bu₂Flu)(2-Me-4-^{t}Bu-Cp)ZrCl₂ (6).

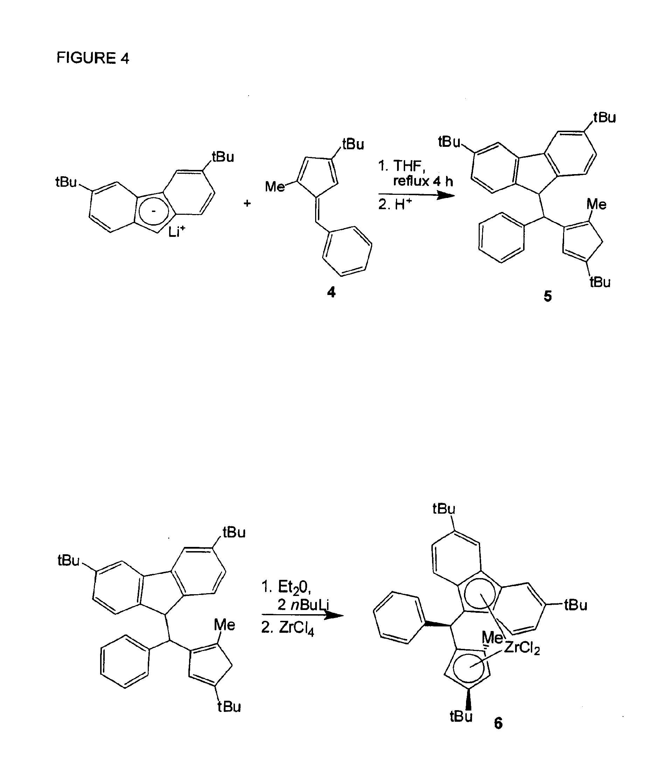

The scheme is represented in Figure 4.

### a) Synthesis of 6-phenyl-2-methyl-4-tert-butyl-fulvene (4).

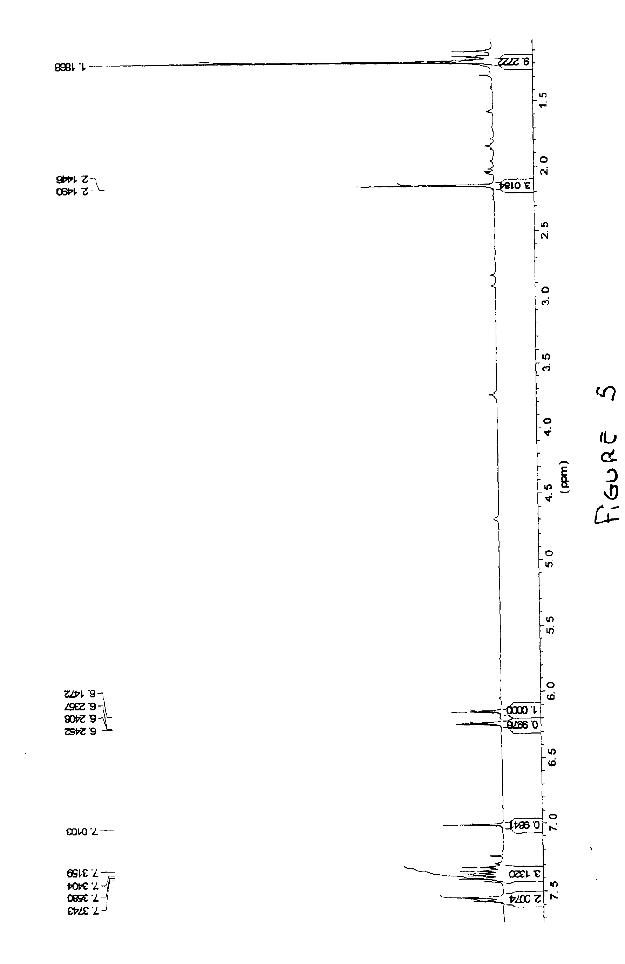

To a solution of 1.94 g (14.24 mmol) of 1-methyl -3-*tert*-butyl -cyclopentadiene (mixture of isomers) in 50 mL of diethyl ether were added 5.7 mL (14.24 mmol) of a 2.5 M solution of butyllithium in hexane at 0 °C. The reaction mixture was stirred for 2 hours and a solution of 1.44 mL (14.24 mmol) of benzaldehide in 30 mL of ether was added drop-wise. The reaction mixture became orange. After 2 hours, 50 mL of a concentrated solution of NH₄Cl was added slowly. This mixture was stirred overnight. The organic layer was separated, dried over MgSO₄ and all the volatiles were removed in vacuum. The orange residue was recrystallised from methanol at - 30 °C to give 1.0 g (4.46 mmol) of compound (1) with a yield of 31 %.
¹H NMR (CDCl₃, 300 MHz, 25 °C) spectrum is presented in Figure 5 and is characterised as follows: δ 7.57 (m, 2H, Ph), 7.40 (m, 3H, Ph), 7.01 (s, 1 H, =C*H*Ph), 6.24 (t, 1 H, C*H*), 6.14 (d, 1 H, C*H*), 2.15 (s, 3H, C*H*₃), 1.19 (s, 9H, CC*H*₃).
¹³C NMR (CD₂Cl₂, 75 MHz, 25 °C): δ 160.4, 145.9, 137.4, 135.5, 131.9, 129.5, 128.4, 128.2, 128.0, 127.2, 125.5, 110.5, 32.1, 29.5, 12.6.

### b) Synthesis of 3,6-Di-tert butyl-9-[(4-tert-butyl-2-methyl-cyclopenta-1,4-dienyl)-Phenyl-ethyl]-9H-fluorene (5).

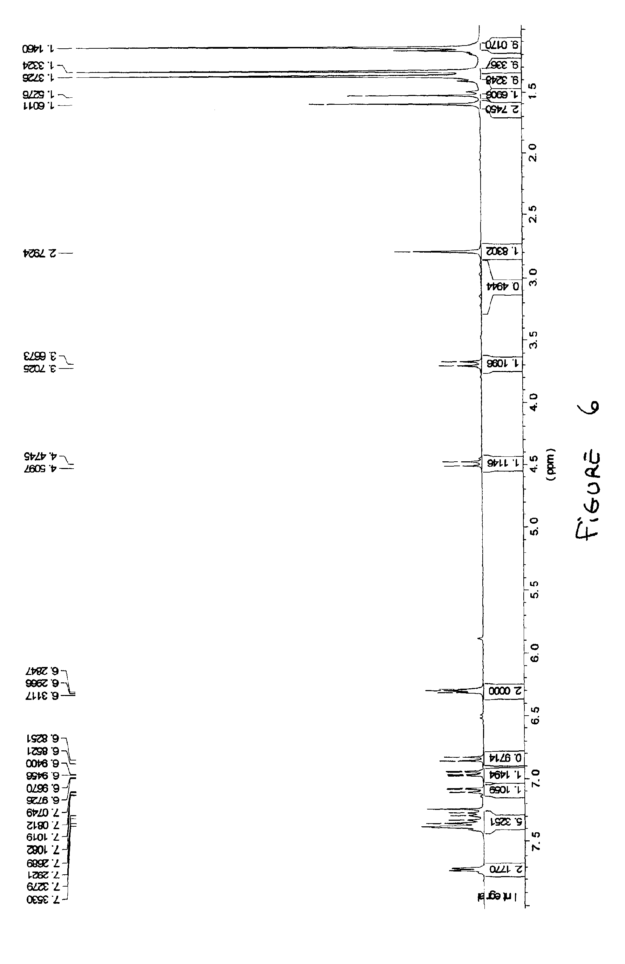

To a solution of 1.75 g (7.80 mmol) of compound (1) in 20 mL of THF were added, at room temperature, 30 mL of a solution of 3,6-di-*tert*-butyl-fluorenyl-lithium prepared by reacting 1.95 g (7.00 mmol) of 3,6-di-*tert*-butyl-fluorene with 2.80 mL (7.00 mmol) of a 2.5 M solution of n-butyl-lithium. The reaction mixture was stirred for 4 h at ambient temperature (about 25 °C) and then quenched with 50 mL of a saturated solution of NH₄Cl and diluted with 50 mL of diethyl ether. The organic layer was separated, washed twice with 200 mL of water and dried over CaCl₂. All the volatiles were removed in vacuum and the residue was dissolved in hot MeOH. The solution was cooled to -30 °C and a white precipitate formed. This latter was filtered and washed with cold methanol (-30 °C) and dried in vacuum overnight to give 2.30 g (4.57 mmol) of final product (2) with a yield of 65 %. It contains about 20 % of isomer 3,6-di-*tert*-butyl-9-[(4-*tert*-butyl-2-methylcyclopenta-1,3-dien-1-yl) (phenyl) methyl]-9H-fluorene.
¹H NMR (CDCl₃, 300 MHz, 25 °C) spectrum is presented in Figure 6 and is characterised as follows: δ 7.70 (dd, 2H, Flu), 7.35 (m, 5H, Ph), 7.08 (dd, 1 H, Flu), 6.95 (dd, 1 H, Flu), 6.83 (d, 1 H, Flu), 6.29 (t, 2H, Flu), 4.48 (d, 1H, ³*J* = 10.6 Hz, CHPh), 3.68 (d, 1H, ³*J* = 10.6 Hz, 9-Flu), 2.79 (s, 2H, C*H*₂, Cp), 1.60 (s, 3H, C*H*₃), 1.37 (s, 9H, CC*H*₃-Flu), 1.33 (s, 9H, CC*H*₃-Flu), 1.14 (s, 9H, CC*H*₃-Flu).
¹³C NMR (CD₂Cl₂, 75 MHz, 25 °C): δ 155.6, 150.0, 149.9, 144.2, 143.9, 143.6, 141.4, 141.3, 139.9, 139.8, 134.6, 128.9, 128.7, 128.6, 126.4, 125.6, 125.3, 124.7, 123.5, 123.4, 115.9, 115.8, 51.0, 50.9, 49.4, 44.0, 34.9, 33.2, 31.8, 31.1, 13.4.

### c) Synthesis of the complex Ph(H)C(3,6-tBu₂Flu)(2-Me-4-^{t}Bu-Cp)ZrCl₂ (6).

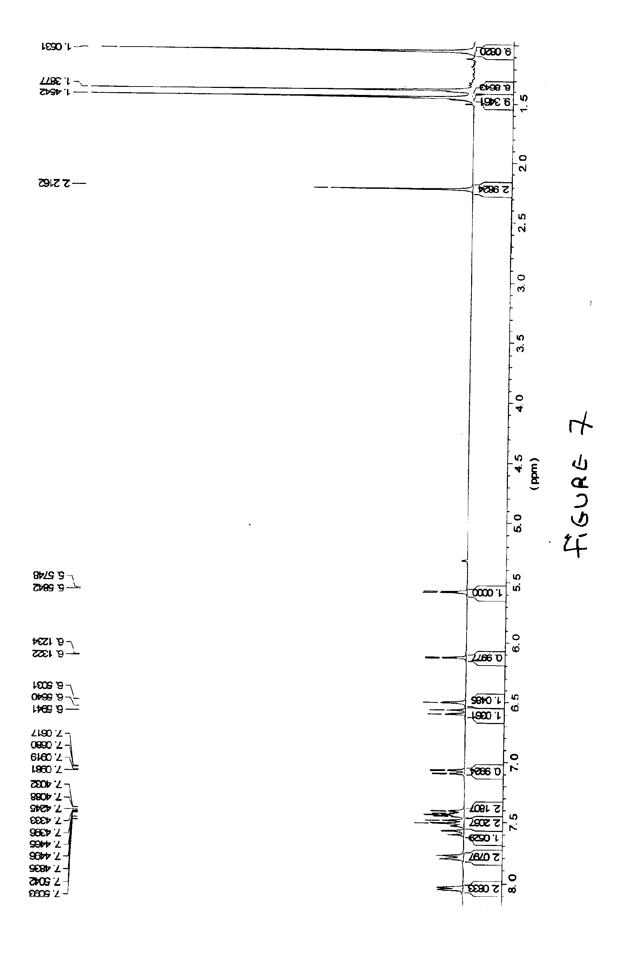

To a solution of 1.025 g (2.04 mmol) of compound 2 in 40 ml of Et₂O were added 1.67 mL (4.08 mmol) of a 2.5 M solution of butyl-lithium in hexane at 0 °C. The reaction mixture was stirred for 4 h and then 0.475 g (2.04 mmol) of anhydrous ZrCl₄ were added in a glovebox. The resulting pink reaction mixture was stirred at room temperature overnight. The solvent was then evaporated in vacuum and 40 mL of hexane were condensed under reduced pressure. The resulting mixture was filtered off and the filtrate was evaporated in vacuum to a give 1.18 g (1.78 mmol) of a pink powder of crude complex (3) with a yield of 88 %. A new quantity of 20 mL of hexane was added to the pink residue. After a period of time of from 1 to 2 hours, a pink precipitate formed. It was isolated by decantation, washed with 10 mL of cold hexane and dried in vacuum to yield 0.53 g (8.80 mmol) of di-chloro-zirconocene (3) with a yield of 40 %. Crystals suitable for X-ray measurements were obtained by slow concentration from a 1:9 CH₂Cl₂/hexane mixture.
¹H NMR (CD₂Cl₂, 300 MHz, 25 °C) spectrum is presented in Figure 7 and is characterised as follows: δ 8.03 (dd, 2H, Flu), 7.78 (d, 2H), 7.58 (d, 1 H), 7.48 (m, 2H), 7.43 (m, 2H), 7.08 (dd, 1 H, Flu), 6.57 (d, 1 H, Flu), 6.50 (s, 1 H, Cp), 6.12 (d, 1 H, ⁴*J* = 2,6 Hz, Cp), 5.57 (d, 1 H,⁴*J* = 2,6 Hz, CHPh), 2.21 (s, 3H, CH₃), 1.45 (s, 9H, CC*H₃*-Flu), 1.38 (s, 9H, CC*H₃*-Flu), 1.05 (s, 9H, CC*H₃*-Flu).
¹³C NMR (CD₂Cl₂, 75 MHz, 25 °C) (Fig. 4): δ 150.2, 150.0, 147.1, 140.1, 129.2, 128.9, 128.6, 128.4, 128.2, 127.6, 126.7, 125.9, 125.3, 124.8, 122.8, 122.5, 121.5, 120.0, 119.5, 119.3, 116.9, 103.2, 100.9, 74.6, 40.2, 35.5, 35.4, 33.2, 32.0, 29.7, 15.8.
Anal. Calcd for C₃₈H₄₄Cl₂Zr: C, 68.85; H, 6.69; Cl, 10.70. (Mr = 662.885 kg/mol); Found: C, 69.01; H, 7.37.

### Synthesis of complex Ph₂C(3,6-^{t}Bu₂-Flu)(3-^{t}Bu-C₅H₃)ZrCl₂(9).

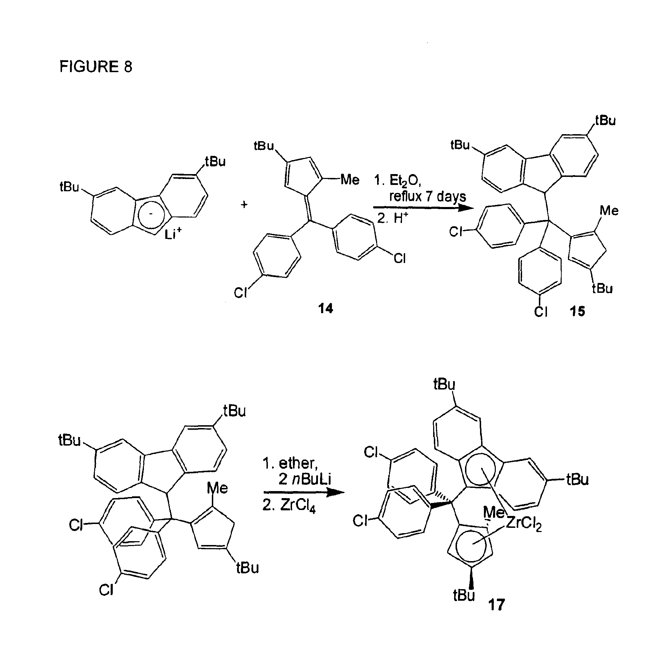

The scheme is represented in Figure 8.

### a) Synthesis of Ph₂C(3,6-tBu₂-FluH)(3-tBu-C₅H₄) (8).

The reaction of sterically hindered stabilized 6,6'-diphenyl fulvenes with fluorenyl-anion is known to proceed sluggishly and requires prolonged and significant heating. The reaction between 6,6'-diphenyl-3-*tert*-butyl-fulvene (**7**) and fluorenyl-anion appeared to depend upon the nature of the solvent. Diethyl ether gave the best results: the reaction proceeded over 5-7 days at a temperature of 60 to 70 °C to give the desired product (**8**) with a yield of 21 %.

### b) Synthesis of complex Ph₂C(3,6-tBu₂-Flu)(3-tBu-C₅H₃)ZrCl₂ (9).

Salt metathesis reaction between ligand (**8**) dianion generated *in situ* and ZrCl₄ was carried out. The reaction proceeded at room temperature in pentane with concomitant precipitation of LiCl. After a usual workup the reaction mixture was kept as a hexane solution for one month at room temperature to obtain red micro-crystals of complex (**9**) with a yield of 46 %.
¹H and ¹³C NMR spectroscopy of complex **(9)** displayed a dissymmetric structure in solution similar to one described for complexes (**3**) and (**6**).

### Synthesis of (p-Cl-Ph)₂C(3,6-di-tert-butyl-9fluorenyl)(2-Me-4-tert-butylcyclopentadienyl) zirconium dichloride (17).

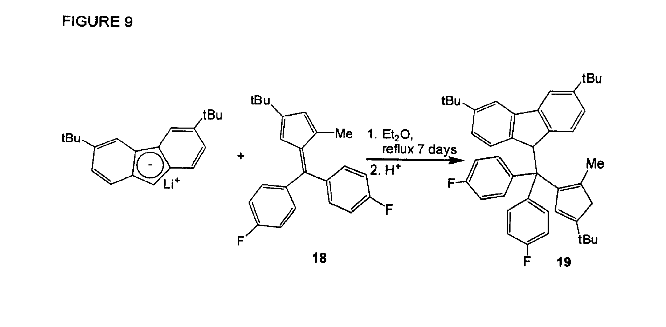

The scheme is represented in Figure 9.

### a) Synthesis of 6,6'-bis(4-chloro-phenyl)- 4-tert-butyl-2-methyl-fulvene (14).

To a solution of 2.27 g (16.66 mmol) of a mixture of isomers of 1-methyl-3-*tert-*butyl-cyclopentadiene in 150 mL of tetrahydrofuran, were added 6.67 mL (16.66 mmol) of a d 2.5 M solution of butyllithium in hexane, at 0 °C. The reaction mixture was stirred for 2 hours and 4.18 g (16.66 mmol) of a solution of 4,4'-dichlorobenzophenone in 50 mL of THF were added dropwise. The reaction mixture turned orange. After 4 hours, 50 mL of a concentrated solution of NH₄Cl were added slowly. The mixture was stirred overnight. The organic layer was separated, dried over MgSO₄ and all the volatiles were removed in vacuum. The orange residue was recrystallized from hot methanol at 25 °C to give 3.7 g (10.02 mmol) of 6,6'-bis(4-chloro-phenyl)-2-methyl-4-*tert*-butyl-fulvene with a yield of 60 % yield.
¹H NMR (CDCl₃, 400 MHz, 25 °C) is characterised as follows: δ 7.32 (m, 4H, Ph), 7.18 (m, 4H, Ph), 6.37 (s, 1 H, Cp), 5.66 (s, 1 H, Cp), 1.53 (s, 3H, C*H*₃), 1.17 (s, 9H, CC*H*₃).
Anal. Calcd for C₂₃H₂₂Cl₂: C, 74.80; H, 7.00. Found: C, 74.85; H, 7.10.

### b) Synthesis of 3,6-di-tert-butyl-9-{(4-tert-butyl-2-methylcyclopenta-1,4-dien-1-yl)[bis(4-chlorophenyl)]methyl}-9H-fluorene (15).

To a solution of 1.33 g (3.60 mmol) of 6,6'-bis(4-chloro-phenyl)-2-methyl-4-*tert*-butyl-fulvene in 30 mL of Et₂O were added, at room temperature, 30 mL of a solution of 3,6-di-*tert*-butyl-fluorenyl-lithium in Et₂O, prepared from 1.0 g (3.59 mmol) of 3,6-di-*tert*-butyl-fluorene and 1.44 mL (3.59 mmol) of a 2.5 M solution of n-butyl-lithium in hexane. The reaction mixture was stirred for 5 days upon reflux and then quenched with 50 mL of a saturated solution of NH₄Cl, diluted with 50 mL of diethyl ether. The organic layer was separated, washed twice with 200 mL of water and dried over CaCl₂. All the volatiles were removed in vacuum. The residue was washed with MeOH then with cold pentane at a temperature of -30 °C on a filter and dried in vacuum overnight to give 1.4 g (2.16 mmol) of final product with a yield of 60 %. Mass spectrum MS-ESI: m/z 645.7 , 370.3 , 277.4.
¹H NMR (THF-*d*₈, 300 MHz, 90 °C) is characterised as follows: δ 7.53 (br s, 2H, Flu), 7.40-6.80 (br m, 14H, Ph and Flu), 6.20 (br s, 1 H, Cp), 5.64 (s, 1 H, 9-Flu), 2.78 (s, 2H, C*H*₂, Cp), 1.36 (s, 3H, C*H*₃), 1.32 (s, 18H, CC*H*₃-Flu), 1.09 (s, 9H, CC*H*₃-Flu).
¹³C NMR (THF-*d*₈, 75 MHz, 90 °C): δ 151.0, 150.1, 149.8, 144.7, 144.3, 143.5, 143.3, 143.2, 141.8, 135.0, 133.7, 133.1, 131.9, 131.5, 130.1, 129.6, 128.9, 127.1, 126.5, 125.3, 123.9, 116.5, 116.3, 116.2, 57.1, 55.4, 41.3, 35.2, 32.5, 31.9, 31.8, 28.9, 28.7, 28.3.
Anal. Calcd for C₄₄H₄₈Cl₂: C, 81.58; H, 7.47. Found: C, 82.04; H, 8.55.

The zirconocene (**17**) was then obtained by reaction with anhydrous ZrCl₄ following the same scheme as that depicted for preparing complex (**3**) or complex (**6**).

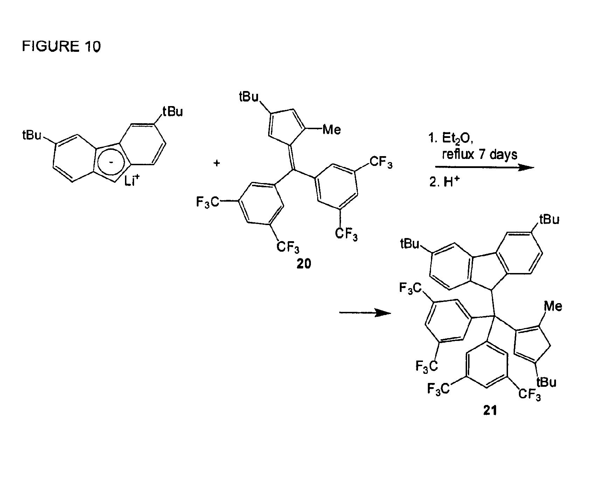

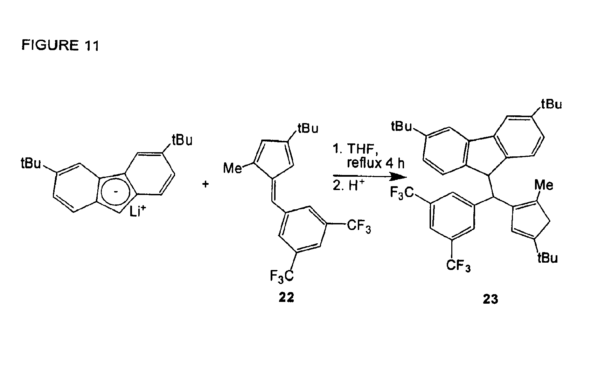

Alternatively, each phenyl group in the bi-phenyl bridge can be substituted by fluorine at position as shown on figure 10 or by two CF3 respectively at positions 3 and 5 as shown on figure 11.

### Synthesis of (3,5-bis(trifluoromethyl)-phenyl)CH(3,6-di-tert-butyl-9fluorenyl)(2-Me-4-tert-butyl-cyclopentadienyl) zirconium dichloride (24).

### a) Synthesis of 6-(3,5-bis(trifluoromethyl)-phenyl)-3-tert-butyl-5-methyl-fulvene (22).

To a solution of 2.81 g, (20.63 mmol) of a mixture of isomers of 1-methyl-3-*tert*-butylcyclopentadienyl in 150 mL of diethyl ether, were added 8.20 mL (20.63 mmol) of a 2.5 M solution of butyllithium in hexane, at 0 °C. The reaction mixture was stirred for 2 hours and a solution of 5.0 g (20.65 mmol) of 3,5-bis(trifluoromethyl)benzaldehide in 50 mL of ether was added dropwise. The reaction mixture turned red. After 2 hours, 50 mL of a concentrated solution of NH₄Cl was added slowly. This mixture was stirred overnight. The organic layer was separated, dried over MgSO₄ and all the volatiles were removed in vacuum. The orange residue was recrystallized from methanol at -30 °C to give 2.60 g (7.22 mmol) of compound 22 with a yield of 35 %.
¹H NMR (CDCl₃, 300 MHz, 25 °C) is characterised as follows: δ 7.92 (s, 2H, Ph), 7.79 (s, 1 H, Ph), 6.95 (s, 1H, =C*H*Ph), 6.25 (t, 1 H, CH), 5.92 (d, 1 H, CH), 2.11 (s, 3H, CH₃), 1.15 (s, 9H, CCH₃). ¹⁹F NMR (CDCl₃, 282 MHz, 25 °C): δ -62.6.
Anal. Calcd for C₃₄H₃₂F₂: C, 62.98; H, 5.56. Found: C, 63.67; H, 5.98.

### b) Synthesis of 9-[[3,5-bis(trifluoromethyl)phenyl](4-tert butyl-2-methylcyclopenta-1,4-dien-1-yl)methyl]-3,6-di-tert-butyl-9H-fluorene (23).

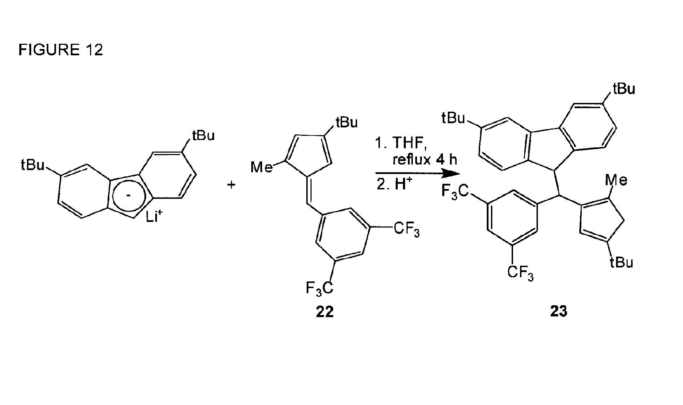

The scheme for preparing component (23) is represented in Figure 12.

To a solution of 2.60 g (7.21 mmol) of compound **22** in 25 mL of THF, were added, at room temperature, 30 mL of a solution of 3,6-di-*tert*-butyl-fluorenyl-lithium prepared from 2.00 g (7.20 mmol) of 3,6-di-*tert*-butyl-fluorene and 2.90 mL (7.21 mmol). of a 2.5 M solution of n-butyl-lithium. The reaction mixture was stirred for 4 h at room temperature and then quenched with 50 mL of a saturated solution of NH₄Cl diluted with 50 mL of diethyl ether. The organic layer was separated, washed twice with 200 mL of water and dried over CaCl₂. All the volatiles were removed in vacuum. The residue was purified by column chromatography over silica gel using hexane as an eluent to give 0.2 g (0.31 mmol) of final compound **23** as a mixture of two isomers in relative amounts of 2:3 with a yield of 4 %.
¹H NMR (CDCl₃, 300 MHz, 25 °C) is characterised as follows: δ 7.70 (m, 3H, Ph), 7.20-6.30 (m, 6H, Flu), 6.20 (s, 1 H, Cp), 5.91 (s, 1 H, Cp), 4.48 (m, 1 H, CHPh), 3.95 (m, 1 H, 9-Flu), 3.19-2.73 (m, 2H, C*H*₂, Cp), 1.59-1.52 (s, 3H, C*H*₃), 1.36-1.33 (s, 18H, CC*H*₃-Flu), 1.16-1.14 (s, 9H, CC*H*₃-Flu).
¹⁹F NMR (CDCl₃, 282 MHz, 25 °C): δ -62.41, -62.45.
Anal. Calcd for C₄₀H₄₄F₆: C, 75.21; H, 6.94. Found: C, 76.14; H, 7.01.

The zirconocene (**24**) was then prepared following the method used to prepare components (**3**) and (**6**).

The catalyst components synthetised here-above were tested in the homo- or copolymerisation of propylene. They were activated with methylaluminoxan (MAO) and optionally deposited on a silica support: they produced highly isotactic homopolymers of propylene or ethylene-propylene rubber (EPR) having excellent impact properties. The polymerisation conditions and results are displayed in Table I for heterogeneous polymerisation and in Table II for homogeneous polymerisation.

### Preparation of isotactic polypropylene in heterogeneous catalysis.

| Cata* | Polym. T °C | H2 L | Activity g | Mn kDa | Mw kDa | D | Tf °C | Tc °C |
|---|---|---|---|---|---|---|---|---|
| 1 | 70 | - | 676 | 90 | 330 | 3.6 | 150.4 | 110.8 |
| 1 | 70 | 0.02 | 641 | 100 | 390 | 3.9 | 152.7 | 109.8 |
| 2 | 70 | - | | 170 | 450 | 2.6 | 160.1 | 110.2 |
| 2 | 70 | 0.02 | | 100 | 350 | 3.5 | 162.1 | 109.9 |

| | | | | | | | | |
|---|---|---|---|---|---|---|---|---|
| * cata1 = PhCH(5-Me-3-t-bu-Cp)(3,6-di-t-bu-Flu)ZrCl₂ cata2 = CH₂(5-Me-3-t-bu-Cp)(3,6-di-t-bu-Flu)ZrCl₂ | | | | | | | | |

D is the molydispersity index defined as the ratio Mw /Mn of the weight average molecular weight distribution Mw over the number average molecular weight distribution Mn. Molecular weights are determined by gel permeation chromatography (GPC). Tf and Tc are respectively the melting and crystallisation temperatures; they are determined by DSC calorimetry.

### Preparation of isotactic polypropylene in homogeneous catalysis.

| cata | Polym. T °C | H2 L | Activity g | Mn kDa | Mw kDa | D | Tf °C | Tc °C | mmmm |
|---|---|---|---|---|---|---|---|---|---|
| 2 | 60 | | 30 | 410 | 910 | 2.25 | 160 | 110 | 95.9 |
| 2 | 70 | - | 50 | 255 | 750 | 3 | 160 | 111 | 96.3 |
| 2 | 70 | 0.02 | 70 | 225 | 705 | 3.1 | 161 | 111 | 96 |
| 2 | 80 | - | 70 | 210 | 555 | 2.75 | 163 | 111 | 97.5 |

All resins produced with the new catalyst system according to the present invention had very high molecular weights and melting temperature.

Additional examples carried out on the copolymerisation of ethylene with propylene led to ethylene-propylene rubber having high viscosity, high molecular weight and melt flow rate smaller than 10 dg/min and thus excellent impact properties. With prior art catalyst systems, the molecular weight of the EPR was very low with a very low viscosity leading to bad impact properties.

## Claims

1. A process for preparing a catalyst component of general formula
R^{a}₂C(3,6-R^{b}₂-Flu)(2-R^{c}-4-R^{d}-C₅H₂)MQ₂
wherein R^{a}₂C is a mono-carbon bridge with each R^{a} being independently selected from H or, unsubstituted or substituted, phenyl group;
wherein R^{b}, R^{c} and R^{d} are each independently selected from H or alkyl having from 1 to 12 carbon atoms or aryl groups substituted or unsubstituted, with the restriction that R^{b}, R^{c} and R^{d} are not all simultaneously hydrogen;
wherein M is a group 4 metal and Q is halogen or alkyl having from 1 to 12 carbon atoms;
that comprises the steps of:
a) reaction by nucleophilic addition, in a solvent, of the group (R^{a}₂C-2-R^{c}-4- R^{d}-fulvene) with the group [3,6-R^{b}₂-Flu]⁻ [M']⁺ wherein M' is group 1 of the Periodic Table;
b) hydrolysis and separation of the resulting ligand;
c) deprotonation of the ligand of step b) with R'M" to prepare a di-anion ligand, wherein R' is an alkyl having from 1 to 6 carbon atoms and wherein M" is Li, Na or K;
d) salt metathesis reaction in a solvent of the di-anion ligand of step c) with MQ₄;
e) isolation of the catalyst component.

2. The process of claim 1 wherein both R^{a} are hydrogen or one R^{a} is hydrogen and the other R^{a} is unsubstituted or substituted phenyl.

3. The process of claim 1 or claim 2 wherein the R^{b} are the same and are tert-butyl.

4. The process of any one of claims 1 to 3 wherein R^{c} is methyl in position 2 and R^{d} is tert-butyl in position 4.

5. The process of any one of the preceding claims wherein the solvent of step a) is Et₂O.

6. The process of claim 5 wherein the solvent in step d) is also Et₂O.

7. The process of any one of the preceding claims wherein M" is Li.

8. Use of the metallocene catalyst component obtainable by the process of any one of claims 1 to 7 in combination with a suitable activating agent to prepare ethylene-propylene rubber having an ethylene content of from 8 to 15 wt%, a weight average molecular weight of at least 500 kDa and excellent impact properties.

9. Use of the metallocene catalyst component obtainable by the process of any one of claims 1 to 7 in combination with a suitable activating agent to prepare isotactic polypropylene having a weight average molecular weight of more than 500 kDa, a melting temperature of more than 150 °C and an mmmm of more than 95.
